# EUROPEAN PATENT APPLICATION

(11) **EP 4 769 824 A1**
(43) Date of publication of application: **01.07.2026**
(21) Application number: 25774740.2
(22) Date of filing: 14.03.2025
(51) Int. Cl.: H01M 50/60, H01M 50/105, H01M 50/211, H01M 50/531, H01M 50/507, H01M 50/249, B60L 50/64

(54) **BATTERY MODULE COMPRISING GELATOR**

(30) Priority: 18.03.2024 KR 20240037431
(71) Applicant: LG Energy Solution, Ltd., Seoul 07335 (KR)
(72) Inventor: CHOI, Jungwoo, Daejeon 34122 (KR)
(74) Representative: BCKIP Part mbB
(86) International application number: PCT/KR2025/003349
(87) International publication number: WO 2025/198267

(57) **Abstract**

The present invention provides a structure of a battery module including: a battery cell accommodating an electrolyte; a frame accommodating the battery cell; and a gelator provided on a bottom surface of the frame and gelates the electrolyte to reduce fluidity thereof.

## Description

### [TECHNICAL FIELD]

This application claims the benefit of priority based on Korean Patent Application No. 10-2024-0037431 filed on March 18, 2024, entire content disclosed in the document of the patent applications is included as a part of this specification.

The present invention relates to a battery module including a gelator that gelates an electrolyte.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used.

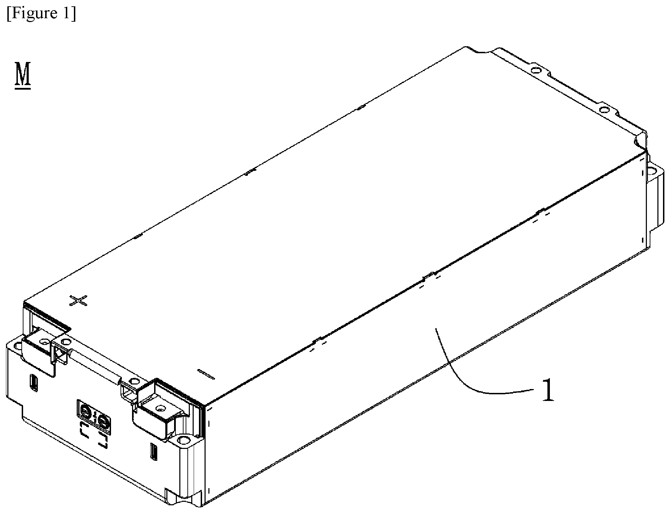

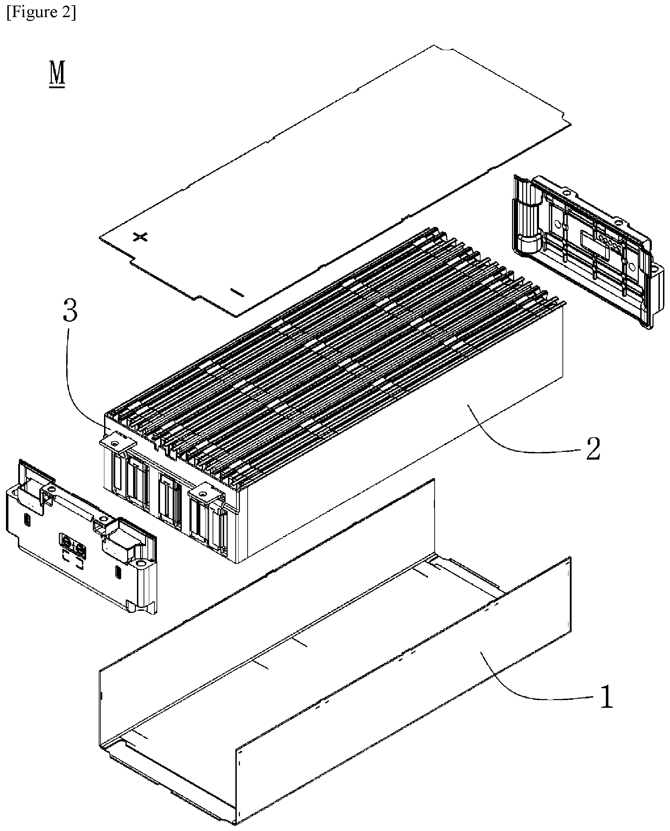

FIGS. 1 and 2 illustrate a structure of a battery module. Referring to FIGS. 1 and 2, a battery module M is manufactured by placing a plurality of stacked battery cells 2 in a frame 1 of metal material. As shown in FIG. 2, the frame 1 may form a box-shaped housing together with other plates covering the upper end and the front and rear ends of the battery cell 2. A bus bar frame assembly 3 electrically connecting the battery cells 2 is connected to one side of the battery cells 2.

Meanwhile, a pouch-type battery cell having the following structure is widely used as the battery cell 2.

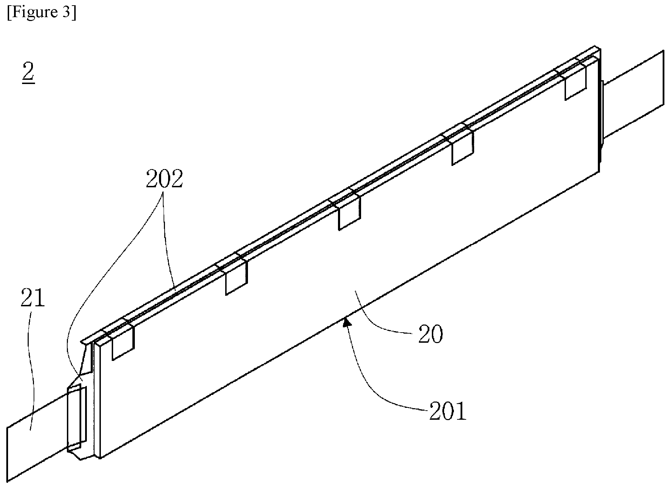

FIG. 3 illustrates a structure of a pouch-type battery cell. Referring to FIG. 3, the pouch-type battery cell 2 is manufactured by forming a pouch 20 by folding in half and sealing a pouch sheet of metal material that accommodates an electrode assembly. Accordingly, the pouch 20 is provided with a sealed portion 202 on three sides except for a folded side 201.

Meanwhile, the sealed portion 202 is manufactured by fusion, etc., and the sealing may be weakened due to reasons such as the passage of time or exposure to high heat. Such weakening of the sealing causes a leakage of the electrolyte charged inside the pouch 20.

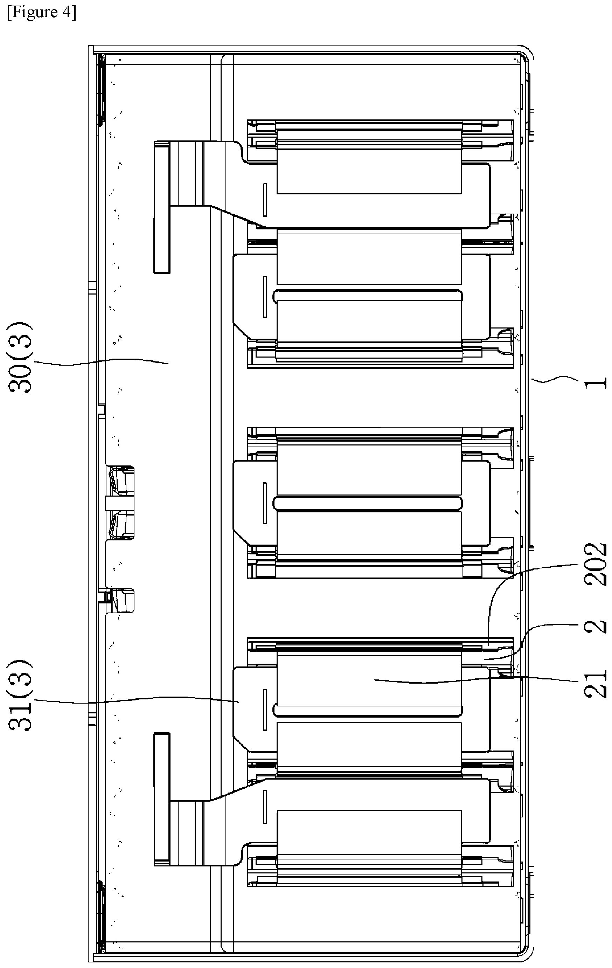

FIG. 4 illustrates a battery cell and a bus bar frame assembly accommodated in a frame. Referring to FIG. 4, the battery cell 2 includes an electrode lead 21 that protrudes out of the pouch 20 to supply power to the outside, and the electrode lead 21 may be connected to a bus bar 31 provided in the bus bar frame assembly 3. The electrode lead 21 may have a polarity of cathode or anode.

In the case of leakage of electrolyte as described above, a short circuit may occur at electrode leads 21 or bus bars 31 of different polarities due to the leaked electrolyte. Since a short circuit may lead to an explosion due to high temperature heat and gas, it is necessary to prevent the same.

### [DISCLOSURE]

### [TECHNICAL PROBLEM]

In order to solve above-described problems of the prior art, it is an object of the present invention to provide a structure of a battery module capable of preventing a short circuit.

It is an object of the present invention to provide a structure of a battery module capable of preventing a short circuit caused by electrolyte leaking from a battery cell.

Specifically, it is an object of the present invention to provide a structure of a battery module capable of preventing the accumulation or flow of the leaked electrolyte.

In addition, it is an object of the present invention to provide a structure of a battery module capable of reducing the ionic conductivity of the leaked electrolyte.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides a structure of a battery module including: a battery cell accommodating an electrolyte; a frame accommodating the battery cell; and a gelator provided on a bottom surface of the frame and gelates the electrolyte to reduce fluidity thereof.

The battery module according to the present invention may be any structure regardless of the name thereof as long as a battery cell and a frame that accommodates the battery cell are included. For example, in case of a cell-to-pack structure in which a battery cell is accommodated in a pack frame instead of constituting a battery module to directly constitute a battery pack, the pack frame may correspond to the frame of the present invention, and the battery pack may correspond to the battery module of the present invention. Alternatively, for example, in case of a cell-to-chassis structure in which a battery cell is directly built into a chassis instead of constituting a battery module or a battery pack, the chassis may correspond to the frame of the present invention, and an assembly including the battery cell and the chassis may correspond to the battery module of the present invention.

In addition, the structure and shape of the battery cell are not limited thereto. Specifically, the battery cell according to the present invention may have various structures and shapes such as a pouch-type, a cylindrical-type, a prismatic-type and a cartridge-type.

Accordingly, the leaked electrolyte may be prevented from flowing within the frame or accumulating at a specific location, which causes a short circuit.

The structure or shape of the gelator is not limited thereto as long as the electrolyte is gelated by mixing or coming into contact.

For example, the gelator may include powder accommodated in a capsule. Alternatively, the gelator may include gel-forming powder and a capsule accommodating the same. Here, the capsule may include a water-soluble material, and may be dissolved or melted by the electrolyte to expose the gelator to the electrolyte.

The ionic conductivity of the electrolyte may be reduced by gelation. Accordingly, even when the electrolyte is gelated at a location where a short circuit may occur, the short circuit may be substantially prevented.

The battery cell may be a pouch-type battery cell including a pouch formed by folding in half and sealing a pouch sheet. Here, the battery cell may be accommodated in the frame with the folded side of the pouch sheet facing downward.

In such case, since the two ends of the folded side are the locations of the battery cell where leakage is most likely to occur, the gelator may be provided at locations corresponding to the two lengthwise ends of the folded side.

An electrode lead may be provided at one lengthwise end of the battery cell. Here, the gelator may be provided at least below the electrode lead to prevent the electrode lead from coming into contact with the electrolyte in liquid state.

The battery module may further include a bus bar connected to the electrode lead. Here, the gelator may be provided at least below the bus bar to prevent the bus bar from coming into contact with the electrolyte in liquid state.

At least one pair of bus bars may be provided. Here, the gelator may be provided between the pair of bus bars to prevent the pair of bus bars from short-circuiting each other.

The frame may include an inclined surface that guides the electrolyte leaking from the battery cell to flow toward the gelator. By providing the inclined surface, the leaked electrolyte may be guided to be cured at a predetermined location, and the cured electrolyte may be collected at a location where a short circuit is difficult to occur.

An electrode lead may be provided at one lengthwise end of the battery cell. Here, the inclined surface may be provided at least below the electrode lead to prevent the electrode lead from coming into contact with the electrolyte in liquid state.

The battery module may further include a bus bar connected to the electrode leads. Here, the inclined surface may be provided at least below the bus bar to prevent the bus bar from coming into contact with the electrolyte in liquid state.

At least one pair of bus bars may be provided. Here, the inclined surface may be provided between the pair of bus bars to prevent the pair of bus bars from short-circuiting each other.

The present invention also provides a structure of a battery pack including the battery module and a vehicle including the battery pack.

A plurality of battery modules may be integrated into a battery pack to increase the capacity and/or voltage thereof. The battery pack may include an exhaust device capable of discharging gases and flames emitted when the battery module ignites. The battery pack may be built into a vehicle as a power source. The vehicle may include an electric vehicle, a hybrid vehicle, etc.

In contrast, the battery module itself may constitute a battery pack or may be built into a vehicle. For example, the battery module, regardless of the name thereof, may be a battery pack having a cell-to-pack structure in which battery cells directly constitute a battery pack, or a chassis assembly or vehicle having a cell-to-chassis structure in which battery cells are directly built into a chassis to constitute a vehicle.

### [ADVANTAGEOUS EFFECTS]

The present invention may provide a structure of a battery module capable of preventing a short circuit by gelating an electrolyte leaked from a battery cell.

The present invention may provide a structure of a battery module capable of preventing a short circuit by gelating the leaked electrolyte and collecting the gelated electrolyte at a predetermined location.

According to an embodiment of the present invention, provided is a structure of a battery module capable of preventing the risk of a short circuit by inducing the leaked electrolyte to gelate while avoiding a position that may cause an electrical short circuit between neighboring bus bars or electrode leads of different polarities.

Furthermore, the present invention may provide a structure of a battery module with a reduced risk of short circuit by reducing the ionic conductivity of the leaked electrolyte by gelation thereof.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIGS. 1 and 2 illustrate a structure of a battery module.
FIG. 3 illustrates a structure of a pouch-type battery cell.
FIG. 4 illustrates a battery cell and a bus bar frame assembly accommodated in a frame.
FIGS. 5 and 6 illustrate a structure of a battery module according to an embodiment of the present invention.
FIG. 7 illustrates a structure of another battery cell according to an embodiment of the present invention.
FIG. 8 illustrates a frame according to an embodiment of the present invention.
FIG. 9 illustrates a battery cell accommodated in a frame according to an embodiment of the present invention, and FIG. 10 illustrates a cross-section of a battery module according to an embodiment of the present invention.
FIG. 11 illustrates a battery cell and a bus bar frame assembly accommodated in a frame according to an embodiment of the present invention.
FIGS. 12 and 13 illustrate a battery pack and a vehicle according to an embodiment of the present invention, respectively.

### [DESCRIPTION OF REFERENCE NUMERALS]

1: frame
   11: first inclined surface
   12: second inclined surface
2: battery cell
   20: pouch
      201: folded side
      202: sealed portion
   21: electrode lead
3: bus bar frame assembly
   30: bus bar frame
   31: bus bar
4: gelator
M: battery module
P: battery pack
V: vehicle

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Although the following embodiments exemplify a battery cell constituting a battery module, a battery module constituting a battery pack, and a battery pack constituting a vehicle, the battery module according to the present invention may encompass all structures including a battery cell and a frame that accommodates the battery cell. For example, in a cell-to-pack structure in which a battery cell is directly accommodated in a pack frame to constitute a battery pack, the battery pack may correspond to the battery module of the present invention, and in a cell-to-chassis structure in which a battery cell is directly accommodated in a chassis, an assembly of the chassis and the battery cell or the vehicle itself may correspond to the battery module of the present invention.

Hereinafter, preferred embodiments of the present invention will be described with reference to the accompanying drawings.

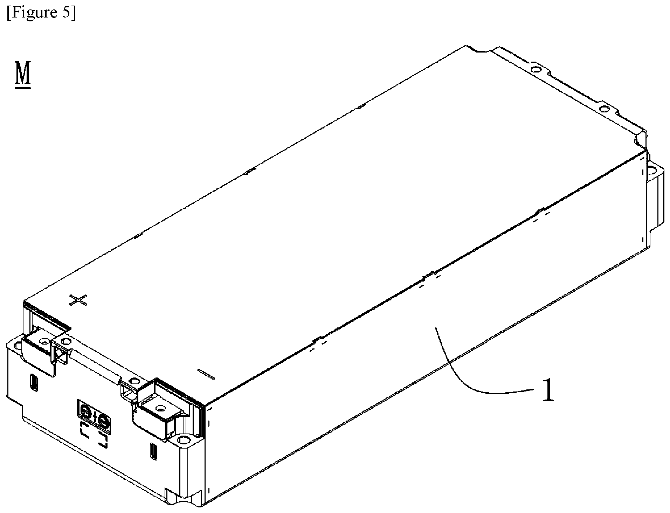

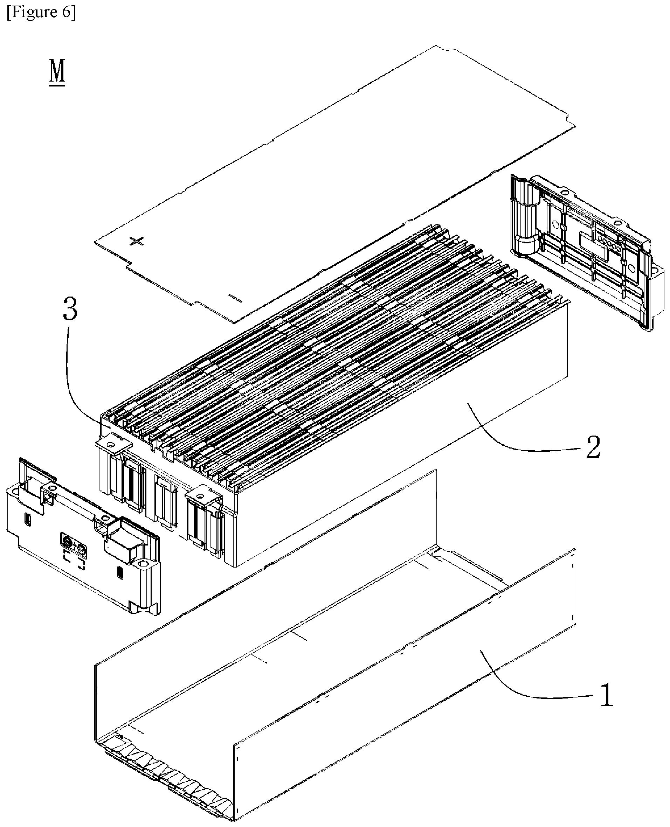

FIGS. 5 and 6 illustrate a structure of a battery module according to an embodiment of the present invention. Referring to FIGS. 5 and 6, a battery module M according to an embodiment of the present invention may include a battery cell 2, a frame 1 that accommodates the battery cell 2, and a bus bar frame assembly 3 connected to one side of the battery cell 2.

The battery cell 2 may be a pouch-type battery cell in which multiple cells are stacked, but is not limited thereto.

The frame 1 may have open upper end, open front end, and/or open rear end, and form a housing with other plate members where the battery cell 2 is accommodated. However, the shape of the frame 1 is not specifically limited.

The frame 1 may include a metal material.

The bus bar frame assembly 3 may be connected to one side of the battery cell 2.

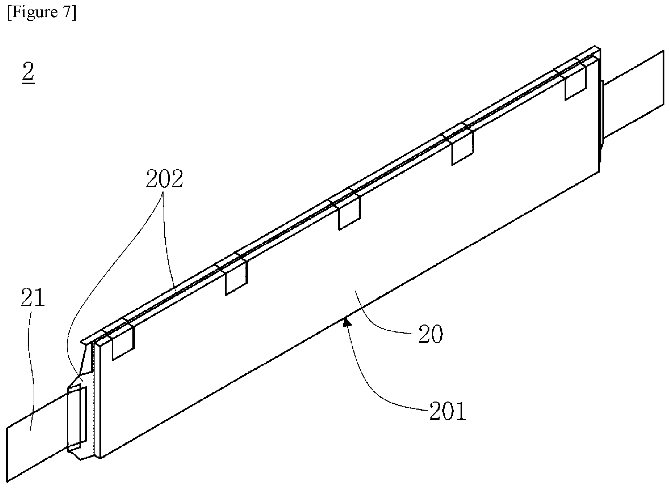

FIG. 7 illustrates a structure of another battery cell according to an embodiment of the present invention. Referring to FIG. 7, the battery cell 2, which is a pouch-type battery cell, may include a pouch 20 that accommodates an electrode assembly.

The pouch 20 may be formed by folding a pouch sheet in half with the electrode assembly accommodated therein, and then sealing at sealed portions 202 on three sides thereof excluding the folded side 201.

The battery cell 2 may include electrode leads 21 extending from the electrode assembly and protrudes out of the pouch 20. The electrode leads 21 may connect the electrode assembly to the outside, and may have a polarity of anode and cathode, respectively.

The inside of the pouch 20 may be filled with an electrolyte.

Meanwhile, the electrolyte may leak out of the pouch 20 for various reasons. Here, the leakage of the electrolyte occurs mainly along the area where the sealed portion 202 is provided as the sealing of the sealed portion 202 is weakened.

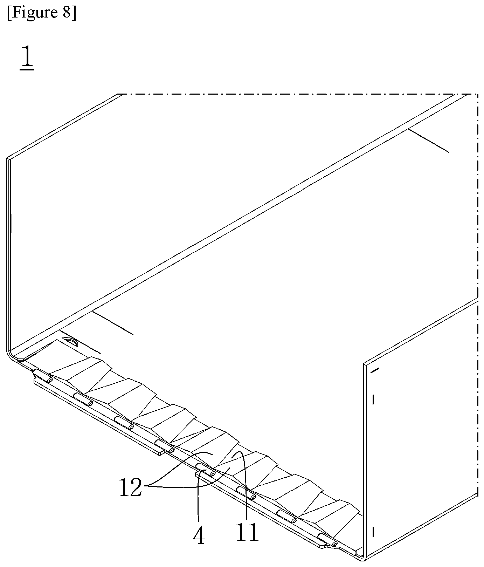

FIG. 8 illustrates a frame according to an embodiment of the present invention. Referring to FIG. 8 and back to FIG. 6, the battery module M according to an embodiment of the present invention may include a gelator 4 provided on the bottom surface of the frame 1 to gelate the electrolyte leaking from the battery cell 2.

As the gelator 4 gelates the leaked electrolyte, the electrolyte may be prevented from flowing freely within the frame 1 or from being collected at a specific location, which causes a short circuit.

The structure or shape of the gelator 4 is not limited as long as the electrolyte is gelated by mixing or coming into contact.

For example, the gelator 4 may include powder accommodated in a capsule. Alternatively, the gelator 4 may include gel-forming powder and a capsule accommodating the same. Here, the capsule may include a water-soluble material, and may be dissolved or melted by the electrolyte to expose the gelator 4 to the electrolyte.

The gelator 4 is preferably installed in a location where the electrolyte is likely to leak so as to gelate the electrolyte as quickly as possible. For example, since the two ends of the folded side 201 are the locations of the battery cell 2 where leakage is most likely to occur, the gelator 4 may be provided at locations corresponding to the two lengthwise ends of the folded side 201.

According to an embodiment of the present invention, provided are a plurality of gelators 4 spaced apart from each other so that the leaked electrolyte may be divided into several lumps and gelated. Accordingly, the risk of a short circuit through the gelated electrolyte may be further reduced.

The ionic conductivity of the electrolyte may be reduced by gelation. Accordingly, even when the electrolyte is gelated at a location where a short circuit may occur, the short circuit may be substantially prevented.

The frame 1 may include inclined surfaces 11 and 12 that guide the electrolyte leaking from the battery cell 2 to flow toward the gelator 4. The inclined surfaces 11 and 12 may be provided so as to guide the electrolyte to a location away from the electrode lead 21 or the bus bar 31.

According to an embodiment of the present invention, by providing the inclined surface 11 and 12, the leaked electrolyte may be guided to be cured at a predetermined location, and the cured electrolyte may be collected at a location where a short circuit is difficult to occur.

A plurality of inclined surfaces 11 and 12 may be provided. Here, the plurality of inclined surfaces 11 and 12 may be provided such that the electrolyte flows to multiple different locations and then cures into a plurality of lumps separate from each other.

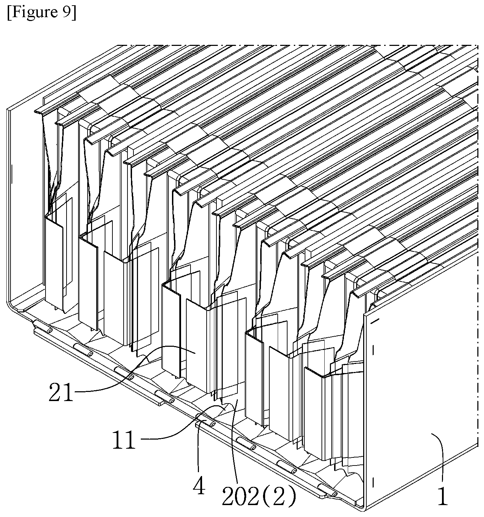

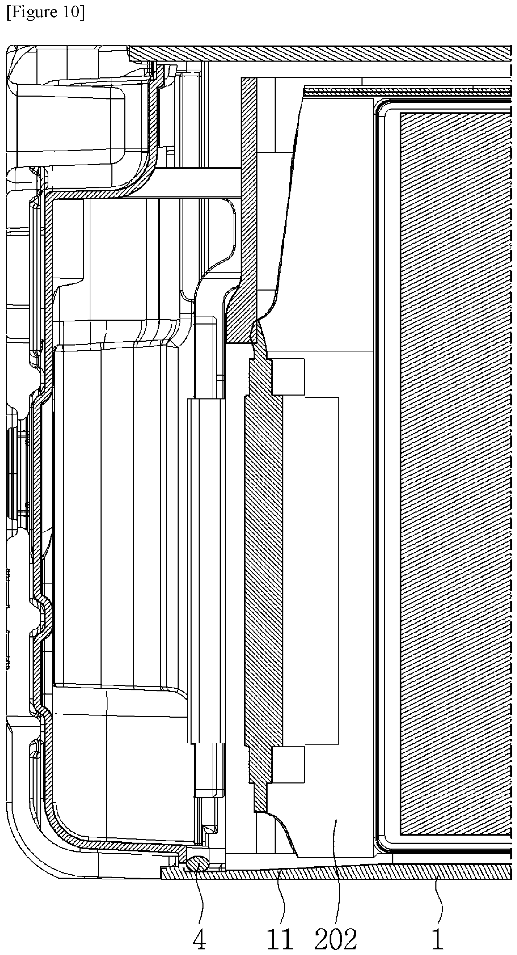

FIG. 9 illustrates a battery cell accommodated in a frame according to an embodiment of the present invention, and FIG. 10 illustrates a cross-section of a battery module according to an embodiment of the present invention. Referring to FIGS. 9 and 10, the gelator 4 according to an embodiment of the present invention may be provided at a location other than directly below the electrode lead 21, and the inclined surface may include the first inclined surface 11 provided at least below the electrode lead 21 to guide the electrolyte to flow toward the gelator 4.

Specifically, the gelator 4 may be provided to be spaced apart further forward than the electrode lead 21, and the first inclined surface 11 may be provided directly below the electrode lead 21 in a shape inclined forward to guide the electrolyte to flow toward the gelator 4.

According to an embodiment of the present invention, the electrolyte may be collected by flowing to a location away from the electrode lead 21 and then cured such that the possibility of contact between the electrode lead 21 and the electrolyte may be reduced to prevent a short circuit.

According to a modified example, the gelator 4 may be provided at least below the electrode lead 21 so as to gelate the electrolyte approaching the electrode lead 21.

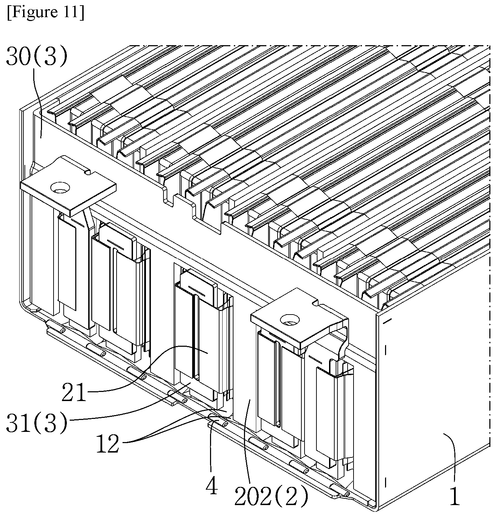

FIG. 11 illustrates a battery cell and a bus bar frame assembly accommodated in a frame according to an embodiment of the present invention. Referring to FIG. 11, the bus bar frame assembly 3 may include a bus bar 31 connected to the electrode lead 21 and a bus bar frame 30 on which the bus bar 31 is mounted. The bus bar 31 may connect the electrode leads 21 having the same or different polarities in parallel and/or in series.

The inclined surface may include a second inclined surface 12 inclined on one widthwise end or two widthwise ends.

The gelator 4 may be provided at a location other than directly below the bus bar 31, and the second inclined surface 12 may be provided at least below the bus bar 31 to guide the electrolyte to flow toward the gelator 4.

At least one pair of bus bars 31 may be provided. Here, the gelator 4 may be provided at a location other than between the pair of bus bars 31, and the second inclined surface 12 may be provided at least between the pair of bus bars 31 to guide the electrolyte to flow toward the gelator 4.

According to an embodiment of the present invention, a plurality of bus bars 31 arranged in widthwise direction may be provided, and the gelator 4 may be provided at a location other than directly below the bus bar 31 and other than between any pair of neighboring bus bars 31. Here, the second inclined surface 12 may be provided directly below the bus bar 31 and between the pair of bus bars 31 in a shape inclined outward at two widthwise ends thereof to guide the electrolyte to flow toward the gelator 4.

According to a modified example, the gelator 4 may be provided at least below the bus bar 31 to gelate the electrolyte approaching the bus bar 31. Alternatively, the bus bar 31 may include at least one pair of bus bars, and the gelator 4 may be provided between at least the pair of bus bars 31 so as to gelate the electrolyte flowing between the pair of bus bars 31.

In short, the battery module according to an aspect of the present invention may include the inclined surface that guides the leaked electrolyte to flow toward the gelator, which is provided away from a location where a short circuit is likely to occur. In such case, the electrolyte may not cause a short circuit by being collected at a location where coming into contact with the electrode lead 21 or the bus bar 31 is not possible.

In addition, according to the battery module according to another aspect of the present invention, the leaked electrolyte may be collected by gelation at a location where a short circuit is likely to occur. In such case, the electrolyte may not cause a short circuit by being prevented from coming into contact with the electrode lead 21 and/or the bus bar 31, by being prevented from coming into contact with two or more of the electrode leads 21 and/or the bus bar 31 simultaneously, or by being converted into a gel state with low ionic conductivity even when coming into contact with the electrode lead 21 and/or the bus bar 31.

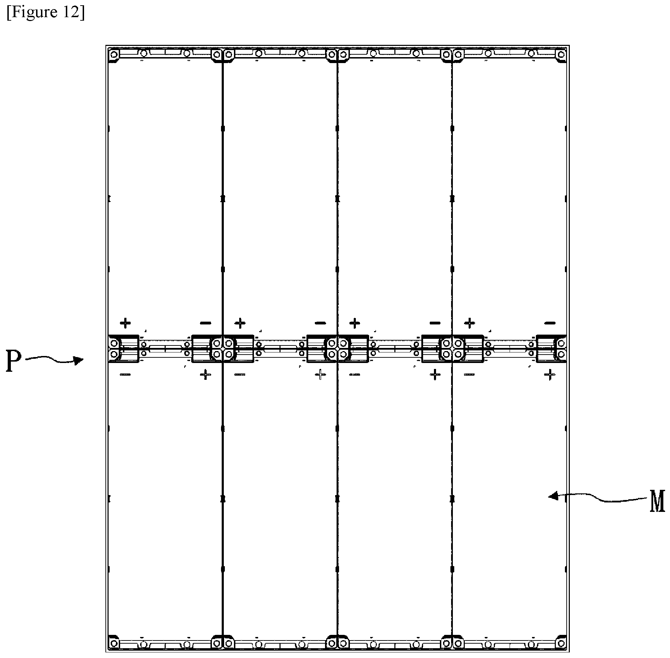

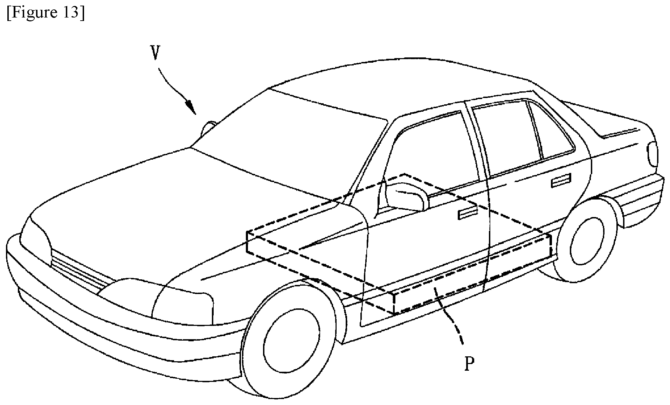

FIGS. 12 and 13 illustrate a battery pack and a vehicle according to an embodiment of the present invention, respectively. Referring to FIGS. 12 and 13, a plurality of battery modules M may be integrated into a battery pack P to increase the capacity and/or voltage thereof. The battery pack P may include an exhaust device capable of discharging gases and flames emitted when the battery module M ignites. The battery pack P may be built into a vehicle V as a power source. The vehicle V may include an electric vehicle, a hybrid vehicle, etc.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery module comprising:
a battery cell accommodating an electrolyte;
a frame accommodating the battery cell; and
a gelator provided on a bottom surface of the frame and gelates the electrolyte to reduce fluidity thereof.

2. The battery module of claim 1, wherein the gelator comprises a powder accommodated in a capsule.

3. The battery module of claim 2, wherein the capsule comprises a water-soluble material.

4. The battery module of claim 1, wherein an ionic conductivity of the electrolyte is decreased by a gelation.

5. The battery module of claim 1, wherein the battery cell comprises a pouch formed by folding in half and sealing a pouch sheet,
the battery cell is accommodated in the frame with a folded side of the pouch sheet facing downward, and
the gelator is provided at a position corresponding to two lengthwise ends of the folded side.

6. The battery module of claim 1, wherein an electrode lead is provided at one lengthwise end of the battery cell, and
the gelator is provided at least below the electrode lead.

7. The battery module of claim 6, wherein the battery module further comprises a bus bar connected to the electrode lead, and
the gelator is provided at least below the bus bar.

8. The battery module of claim 1, wherein an electrode lead and a bus bar connected to the electrode lead are provided at one lengthwise end of the battery cell,
at least a pair of bus bars is provided, and
the gelator is provided between the pair of bus bars.

9. The battery module of claim 1, wherein the frame comprises an inclined surface guiding the electrolyte leaking from the battery cell to flow toward the gelator.

10. The battery module of claim 9, wherein an electrode lead is provided at one lengthwise end of the battery cell, and
the inclined surface is provided at least below the electrode lead.

11. The battery module of claim 10, further comprising: a bus bar connected to the electrode lead,
wherein the inclined surface is provided at least below the bus bar.

12. The battery module of claim 1, wherein an electrode lead and a bus bar connected to the electrode lead are provided at one lengthwise end of the battery cell,
at least a pair of bus bars is provided, and
the inclined surface is provided between the pair of bus bars.

13. A battery pack comprising a battery module of any one of claims 1 to 12.

14. A vehicle comprising a battery pack of claim 13.
